# EUROPEAN PATENT APPLICATION

(11) **EP 1 587 283 A1**
(43) Date of publication of application: **19.10.2005**
(21) Application number: 04360038.6
(22) Date of filing: 14.04.2004
(51) Int. Cl.: H04M 1/02, H04M 1/22, H04M 1/725

(54) **Device casing with a thin film organic display and method for downloading display data**

(71) Applicant: ALCATEL, 75008 Paris (FR)
(72) Inventor: Bohn, Thomas, 70176 Stuttgart (DE); Pascht, Andreas, 73635 Rudersberg (DE)
(74) Representative: Kohler Schmid Möbus

(57) **Abstract**

A casing (2) of a device, in particular a mobile phone (1), is coated with or comprises a thin film organic display (5, 5') on its outer surface and the device comprises a control unit for providing the thin film organic display (5, 5') with electronic data to be displayed. For providing such a device with data to be displayed on the thin film organic display (5, 5'), the device requests data from a server and downloads the data to the control unit.

## Description

### Background of the invention

The invention relates to a device, in particular to a mobile phone, with a casing and a method for providing such a device with data.

There is an increasing demand to personalize devices such as mobile phones by providing them with features which give them an unique look. In order to meet with this demand, manufacturers have designed mobile phones with an inner casing, ensuring mechanical stability, and an exchangeable outer casing.

The outer casing is available in many different design types such that a mobile phone user may individualize his phone by choosing a cover with a particular design type. However, such a double casing increases size and weight of mobile phones.

### Object of the invention

It is the object of the invention to provide a device with a casing having an outer surface with a customizable appearance and to provide a method for customizing the same.

### Brief description of the invention

This object is achieved by a device, in particular a mobile phone, with a casing, wherein the casing is coated with or comprises a thin film organic display on its outer surface and the device comprises a control unit for providing the thin film organic display with electronic data to be displayed and by a method, wherein the device requests data from a server and downloads the data to the control unit.

The invention allows changing the appearance of an outer surface of a casing of a device without having to exchange the casing. Instead of an inner and an exchangeable outer casing used in state-of-the-art mobile phones, the inventive device comprises only one casing. The inventive device may therefore be reduced in size and weight compared to state-of-the-art mobile phones.

In a preferred embodiment of the inventive device, the thin film organic display comprises a plurality of organic thin film transistors or organic light-emitting diodes. By making use of such a technology, full-color-polymer-based active matrix displays can be created. Thin film organic surfaces based on this technology are very flexible and therefore easily fixable to the casing.

In a further preferred embodiment, the look of the outer surface of the casing is customizable by displaying the electronic design data on the thin film organic display. As a result, enormous possibilities for the external appearance of the casing are available.

In one embodiment of the invention the thin film organic display comprises a display window for displaying electronic user data. In another embodiment the casing coated with or comprising the thin film organic display comprises an opening, a further display being provided in the opening. This further display may consist of a liquid crystal display used in state-of-the-art mobile phones. The display surface of the liquid crystal display may be enlarged by using a portion of the organic thin film display surrounding the opening as an additional means for displaying electronic user data.

The above object is also achieved by a method for providing a device as described above with data to be displayed on the thin film organic display, wherein the device requests data from a server and downloads the data to the control unit. A download service for electronic design data may be established, allowing users worldwide to request and download predetermined designs.

Further advantages may be extracted from the description and the enclosed drawings. The features mentioned above and below may be used in accordance with the invention either individually or collectively in any combination. The embodiments mentioned are not to be understood as an exhaustive enumeration but rather have an exemplary character for the description of the invention.

### Drawings

The invention is shown in the drawings, wherein:
- Fig. 1: shows a mobile phone with a casing in accordance with the invention.
- Fig. 2: shows in two partial figures a front view a) and a back view b) of a mobile phone with a casing in accordance with the invention.
- Fig. 3: shows a mobile phone with a casing and an opening in accordance with the invention.

### Description of preferred embodiments

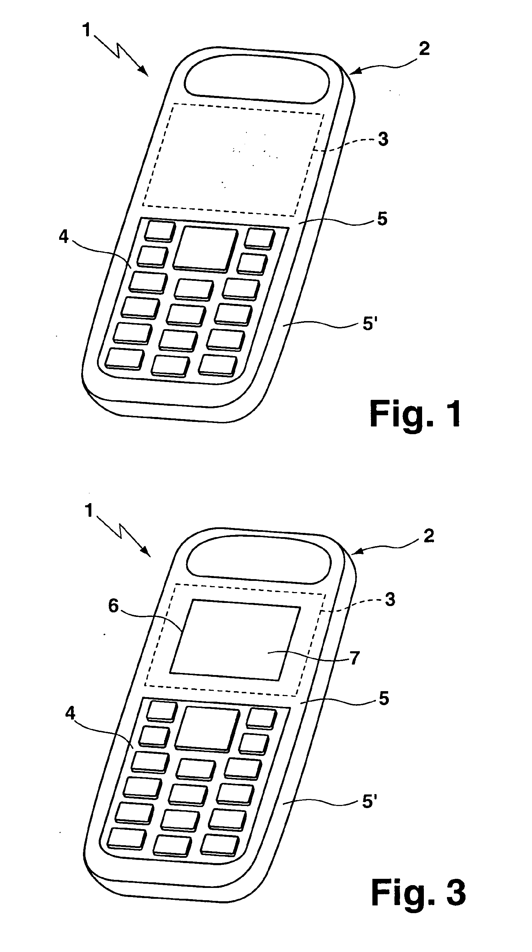

**Fig. 1** shows a mobile phone **1** with a casing **2.** A keypad **4** is inserted into the casing 2 as an input device for user commands. The casing 2 is coated with a front side thin film organic display **5**, and a lateral side thin film organic display **5'**, consisting of a plurality of thin film transistors and forming a full-color-polymer-based active matrix display. It is understood that in the embodiment of Fig. 1, although not explicitly shown, a back side thin film organic display may also be present. The mobile phone 1 has a control unit (not shown) which provides the thin film organic display 5, 5' with electronic data to be displayed. Two kinds of electronic data may be provided by the control unit: design data and user data.

Design data is used to stimulate the thin film organic display 5, 5' in order to change the look of the outer surface of the casing 2. The visual appearance of the mobile phone 1 may be changed by a user selecting one of several predetermined patterns, prints or pictures stored in a memory of the control unit of the mobile phone 1. Alternatively, the user may wish to request electronic design data from a server and download the data to the mobile phone 1 in order to change the look of the casing 2. A download service for downloading predetermined designs for mobile phone casings may be established for this purpose.

User data is data which is used to provide the user of the mobile phone 1 with information, e.g. by representing commands given on the keypad **4**. For the purpose of showing user data, a display window **3** is formed as a section of the front side thin film organic display 5 Of course, part of the display window 3 may also be used to change the look of the outer surface of the casing 2.

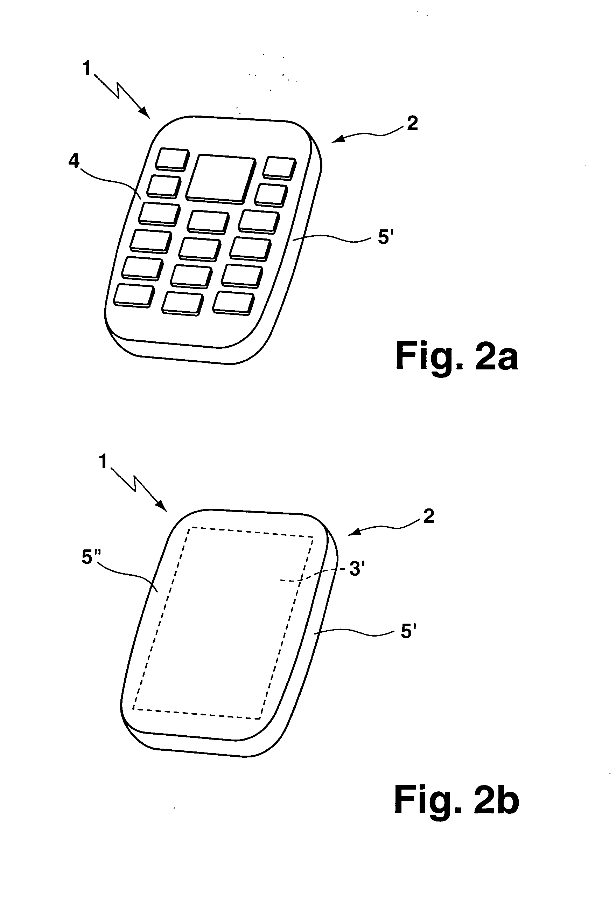

In another embodiment shown in **Fig. 2a** and **2b**, the casing 2 comprises only the keypad 4 on its front side, whereas a back side thin film organic display **5"** is fixed to the back side of the casing 2. The back side thin film organic display 5" comprises a back side display window 3' for displaying user data, e.g. for showing motion pictures. Such a display window forming a part of a thin film organic display may be located anywhere on the casing 2.

In an alternative embodiment shown in **Fig. 3**, the casing 2 comprises an opening **6**. A further, conventional liquid crystal display **7** used for displaying user data is inserted into the opening 6. The display region of the liquid crystal display 7 is enlarged by the display window 3 forming a section of the front side thin film organic display 5. This allows to display electronic user data in a larger region than that defined by the size of the liquid crystal display 7, namely by including part of the front side thin film organic display 5 into the display region for user data.

It should be clear that the invention is not limited to mobile phone casings, as any device with a casing coated with or comprising a thin film organic display and further comprising a control unit providing data to be displayed on the thin film organic display may be customized in its appearance as described above. Furthermore it is to be underlined that the described thin film organic display technology represents only the first available technology which allows an application as described in the invention. The invention is not limited to this technology and includes also future applicable display technologies.

## Claims

1. Device, in particular mobile phone (1), with a casing (2),
**characterized in that**
the casing (2) is coated with or comprises a thin film organic display (5, 5', 5") on its outer surface and the device comprises a control unit for providing the thin film organic display (5, 5', 5") with electronic data to be displayed.

2. Device according to claim 1, **characterized in that** the thin film organic display (5, 5', 5") comprises a plurality of organic thin film transistors or organic light-emitting diodes.

3. Device according to claim 1, **characterized in that** the look of the outer surface of the casing (2) is customizable by displaying electronic design data on the thin film organic display (5, 5', 5").

4. Device according to claim 1, **characterized in that** the thin film organic display (5, 5") comprises a display window (3, 3') for displaying electronic user data.

5. Device according to claim 1, **characterized in that** the casing (2) coated with or comprising the thin film organic display (5, 5', 5") comprises an opening (6), a further display (7) being provided in the opening (6).

6. Method for providing a device according to claim 1 with data to be displayed on the thin film organic display (5, 5', 5"), wherein the device requests data from a server and downloads the data to the control unit.
